# EUROPÄISCHE PATENTSCHRIFT

(11) **EP 4 328 518 B1**
(45) Veröffentlichungstag und Bekanntmachung des Hinweises auf die Patenterteilung: **23.04.2025**
(21) Anmeldenummer: 23181227.2
(22) Anmeldetag: 23.06.2023
(51) Int. Cl.: F24S 25/40, E04D 13/12, F24S 25/613, H02S 20/23, E04C 2/32, E04D 3/16, E04D 3/24, F24S 25/00, E04D 3/30

(54) **ABDECKVORRICHTUNG**
COVERING DEVICE
DISPOSITIF DE COUVERTURE

(30) Priorität: 24.08.2022 DE 102022121439
(43) Veröffentlichungstag der Anmeldung: 28.02.2024
(73) Patentinhaber: SL Rack GmbH, 83527 Haag (DE)
(72) Erfinder: Schletter, Ludwig, 83527 Haag i. OB (DE); Bauer, Georg, 83527 Haag i. OB (DE); Achatz, Florian, 94259 Kirchberg i.W. (DE)
(74) Vertreter: Lichtnecker, Markus Christoph

(56) Entgegenhaltungen:
- DE-A1- 102021 100 081
- DE-U1- 202021 100 034
- US-A1- 2017 237 387
- US-B1- 8 713 858

## Beschreibung

Die Erfindung betrifft eine Abdeckvorrichtung zum Abdecken eines Bereichs eines Dachs, vorzugsweise zur Befestigung eines Solarpanels oder eines Photovoltaikmoduls.

Entsprechende Abdeckvorrichtungen sind beispielsweise aus DE 20 2021 100 034 U1 bekannt, der eine Abdeckvorrichtung gemäß dem Oberbegriff des Anspruchs 1 beschreibt.

Nachteilig daran ist, dass die Konstruktion vergleichsweise komplex ist, da ein Dachhaken durch eine Aussparung der Abdeckvorrichtung geführt wird. Dies führt dazu, dass z.B. eine Gummimanschette erforderlich ist, um die Aussparung abzudichten.

Es ist daher eine Aufgabe der Erfindung, eine Abdeckvorrichtung sowie ein System zu schaffen, welche/s auf einfache und kostengünstige Weise einen Bereich eines Dachs abdichtet.

Die Lösung dieser Aufgabe erfolgt durch die Gegenstände der unabhängigen Ansprüche.

Die erfindungsgemäße Abdeckvorrichtung ist zum Abdecken eines Bereichs eines Dachs, vorzugsweise zur Befestigung eines Solarpanels oder eines Photovoltaikmoduls, ausgebildet oder kann hierzu verwendet werden.

Bei dem Dach kann es sich z.B. um ein Schrägdach handeln.

Vorzugsweise kann in dem Bereich ein Dachhaken am Dach befestigt bzw. abgestützt werden. Am Dachhaken kann wiederum ein Solarpanel oder ein Photovoltaikmodul befestigt, z.B. verschraubt und/oder verklemmt, werden.

Die Abdeckvorrichtung weist eine zumindest im Wesentlichen öffnungsfreie Metallplatte auf.

Folglich weist die Abdeckvorrichtung beispielsweise keine, z.B. zentrale, Aussparung für einen Dachhaken auf. Somit ist keine Gummimanschette oder dergleichen notwendig.

Dies ermöglicht es, einen Bereich eines Dachs auf einfache und kostengünstige Weise abzudichten. Auch ist die Abdeckvorrichtung universell einsetzbar. Beispielsweise kann die Abdeckvorrichtung unabhängig von der Art der Dachziegel eingesetzt werden.

Die Position der Abdeckvorrichtung auf dem Dach ist grundsätzlich beliebig. So kann die Abdeckvorrichtung an einer beliebigen Stelle auf der Dachhaut befestigt werden, vorzugsweise unabhängig davon, ob sich in diesem Bereich ein Sparren befindet oder nicht.

Ein Dachhaken kann beispielsweise auf der Abdeckvorrichtung abgestützt werden. Dieser wird jedoch nicht durch die Metallplatte hindurchgeführt.

Dadurch, dass sich die Dachhaken auf der Abdeckvorrichtung lediglich abstützen, ist die Abdeckvorrichtung mit allen derzeitigen Dachhaken kompatibel.

Die Metallplatte ist zumindest im Wesentlichen öffnungsfrei, also geschlossen. Beispielsweise kleinerer Löcher, z.B. Bohrlöcher oder dergleichen, zum Beispiel zum Verschrauben an einer Unterkonstruktion und/oder zur Befestigung mit der Trittschutzvorrichtung, können dabei jedoch vorgesehen sein. Diese sind im montierten Zustand vorzugsweise ebenfalls geschlossen.

Die Metallplatte kann vorzugsweise rechteckförmig, z.B. quadratisch, ausgebildet sein.

Beispielsweise kann die Metallplatte eine Höhe zwischen 30 cm und 60 cm, vorzugsweise zwischen 45 cm und 55 cm, aufweisen. Die Breite kann beispielsweise zwischen 40 cm und 70 cm, vorzugsweise zwischen 50 cm und 60 cm, betragen.

Von der Abmessung kann die Metallplatte z.B. mindestens oder genau einen, zwei, drei oder vier Dachziegel ersetzen. Grundsätzlich ist die Abmessung jedoch beliebig groß und kann an die jeweiligen Erfordernisse angepasst werden.

Beispielsweise kann die Metallplatte an die gewünschte Position auf dem Dach verschoben werden. Durch die Dimensionierung ist ein gewisses Spiel vorhanden, um den individuellen Gegebenheiten auf dem Dach, z.B. der Position von Dachlatten und/oder Dachbalken, Rechnung zu tragen.

Die Stärke der Metallplatte kann beispielsweise zwischen 0,1 mm und 3 mm, vorzugsweise zwischen 0,1 mm und 1 mm, besonders bevorzugt zwischen 0,1 mm und 0,5 mm, z.B. 0,3 mm, betragen.

Die Metallplatte weist somit vorzugsweise ein geringes Gewicht auf, was die Handhabung erleichtert.

Beispielsweise kann die Metallplatte ein Aluminium- und/oder Bleimaterial umfassen oder daraus bestehen. Vorzugsweise handelt es sich bei der Metallplatte um ein gewalztes Aluminiumblech und/oder Bleiblech.

Die Metallplatte weist einen verformbaren, also vorzugsweise biegbaren und/oder flexiblen, Anpassbereich bzw. Anpassabschnitt auf. Als Teil der Metallplatte ist der Anpassbereich plattenförmig. Die Verformbarkeit kann z.B. über die Dicke der Metallplatte und/oder das Material der Metallplatte gewährleistet werden.

Bei dem Anpassbereich handelt es sich vorzugsweise um einen im montierten Zustand unteren und/oder oberen Bereich, z.B. das untere und/oder obere Drittel, Viertel, Fünftel, Sechstel oder Siebtel, der Metallplatte.

Der Anpassbereich kann an die Form der sich an die Abdeckvorrichtung, vorzugsweise darunter und/oder darüber, anschließenden Dachziegel angepasst werden. Beispielsweise kann der Anpassbereich per Hand bei der Montage an die Kontur der Dachziegel angeformt und/oder angedrückt werden.

Vorzugsweise überlappen der Anpassbereich und die Dachziegel.

Auf diese Weise wird verhindert, dass Verschmutzungen und/oder Wasser am Übergang zwischen der Abdeckvorrichtung und den Dachziegeln eindringen. Beispielsweise Regen- und/oder Schmelzwasser können vielmehr ungehindert ablaufen.

Die Metallplatte weist einen Abdeckbereich bzw. Abdeckabschnitt auf, wobei der Abdeckbereich Riffelungen aufweist. Als Teil der Metallplatte ist der Abdeckbereich plattenförmig.

Die Metallplatte kann beispielsweise vollständig oder lediglich abschnittsweise Riffelungen aufweisen.

Die Riffelungen erhöhen die Stabilität der Metallplatte. So hängt die Metallplatte beispielsweise nicht durch.

Die Metallplatte kann z.B. zunächst gewälzt werden. Anschließend kann eine Riffelung eingebracht werden, beispielsweise mittels einer oder mehrerer Prägerolle/n.

Vorzugsweise sind die Riffelungen in Längsrichtung angeordnet. Verschmutzungen und/oder Wasser kann somit von oben nach unten geregelt abgeführt werden. So kann beispielsweise bei Wind Wasser abgeführt werden.

Der Wind kann das Wasser beispielsweise nicht so leicht seitlich unter die Eindeckung treiben, da in den Tälern der Riffelung windstille Zonen entstehen.

Beispielsweise kann die Metallplatte auch dazu dienen, Leitungen zu führen. So können z.B. Leitungen vom Inneren des Gebäudes zum Dach geführt werden.

Die Metallplatte ist vorzugsweise einstückig geformt. Beispielsweise können der Abdeckbereich und der Anpassbereich einstückig geformt sein. Vorzugsweise weisen der Abdeckbereich und der Anpassbereich dasselbe Material auf. Für die Anpassung an die Form der Dachziegel ist folglich kein separates Material notwendig. Dadurch können die Herstellungskosten geringgehalten werden.

Vorzugsweise gehen der Abdeckbereich und der Anpassbereich ineinander über. Beispielsweise sind der Abdeckbereich und der Anpassbereich gleich breit.

An der Unterseite der Metallplatte ist eine Trittschutzvorrichtung angeordnet. Die Trittschutzvorrichtung kann beispielsweise unmittelbar oder mittelbar an der Metallplatte befestigt bzw. mit dieser verbunden sein.

Die Trittschutzvorrichtung kann vorzugsweise rechteckförmig, z.B. quadratisch, ausgebildet sein.

Die Trittschutzvorrichtung stabilisiert vorzugsweise die Metallplatte, beispielsweise beim Betreten durch einen Monteur.

Die Trittschutzvorrichtung verhindert beispielsweise, dass ein Monteur durch die Metallplatte durchbricht.

Rein optional können durch die Trittschutzvorrichtung vorzugsweise auch Eis und Schnee nicht unter die Dachhaut eindringen.

Zudem kann die Trittschutzvorrichtung optional dazu dienen, dass durch den Druck der Dachhaken ausgelöste Ziegelbrüche vermieden werden.

Schließlich kann die Trittschutzvorrichtung rein optional als Abstützung für darüberliegende Dachhaken verwendet werden. Die Statik wird auf diese Weise verbessert.

Die Trittschutzvorrichtung kann daher beispielsweise multifunktional sein. Alternativ kann die Trittschutzvorrichtung auch, zumindest hauptsächlich, lediglich als Schutz beim Betreten dienen.

Weiterbildungen der Erfindung sind auch den abhängigen Ansprüchen, der Beschreibung sowie den beigefügten Zeichnungen zu entnehmen.

Gemäß einer Ausführungsform ist die Trittschutzvorrichtung, vorzugsweise zentral, an der Unterseite der Metallplatte befestigt.

Die Trittschutzvorrichtung ist somit fest, vorzugsweise unlösbar, mit der Metallplatte verbunden.

Die Trittschutzvorrichtung kann beispielsweise in einem zentralen Bereich, einem oberen Bereich und/oder einem unteren Bereich der Metallplatte angeordnet sein.

Nach einer weiteren Ausführungsform ist die Trittschutzvorrichtung mit der Metallplatte verklebt.

Die Trittschutzvorrichtung kann dadurch auf kostengünstige Weise mit der Metallplatte verbunden werden.

Alternativ kann die Trittschutzvorrichtung mit der Metallplatte vernietet sein.

Gemäß einer weiteren Ausführungsform ist die Trittschutzvorrichtung plattenförmig ausgebildet.

Vorzugsweise ist die Trittschutzvorrichtung parallel zur Metallplatte orientiert.

Bevorzugt ist die Trittschutzvorrichtung frei von Riffelungen.

Nach einer weiteren Ausführungsform weist die Trittschutzvorrichtung wenigstens einen nach unten gerichteten Vorsprung auf.

Vorzugsweise sind genau oder mindestens zwei, drei oder vier Vorsprünge vorgesehen. Beispielsweise kann an jeder Seite genau oder wenigstens ein Vorsprung vorgesehen sein.

Der Vorsprung kann gerade oder hakenförmig ausgebildet sein. Beispielsweise kann sich der Vorsprung rechtwinklig von der restlichen Trittschutzvorrichtung aus erstrecken.

Durch den Vorsprung kann auf einfache Weise eine Anpassung an die gewünschte Höhe erfolgen. Unterschiedliche Höhen können sich beispielsweise durch verschiedene Dachlatten und/oder Ziegel ergeben.

Gemäß einer weiteren Ausführungsform ist die Trittschutzvorrichtung kleiner als die Metallplatte.

Beispielsweise ist die Fläche der Trittschutzvorrichtung höchstens 1/2, 1/3, 1/4, 1/5 oder 1/6 so groß wie die Fläche der Metallplatte. Die Trittschutzvorrichtung stabilisiert hierbei lediglich einen Abschnitt der Metallplatte.

Alternativ kann sich die Trittschutzvorrichtung unterhalb des gesamten Abdeckbereichs erstrecken.

Nach einer weiteren Ausführungsform weist die Trittschutzvorrichtung ein Metallmaterial auf oder besteht daraus.

Die Trittschutzvorrichtung ist vorzugsweise nicht verformbar, also starr. Auf diese Weise hält die Trittschutzvorrichtung Belastungen, z.B. das Gewicht eines Monteurs, stand.

Gemäß einer weiteren Ausführungsform weisen die Riffelungen wellenförmige, sägezahnförmige, rechteckförmige und/oder trapezförmige Strukturen auf oder bestehen daraus.

Die Riffelungen sind vorzugsweise einstückig aus der Metallplatte ausgeformt. Es handelt sich beispielsweise um keine Rippen oder dergleichen, welche z.B. nachträglich mit der Metallplatte verbunden werden.

Nach einer weiteren Ausführungsform sind die Riffelungen auf der Ober- und Unterseite der Metallplatte vorgesehen.

So können Berge auf der Oberseite beispielsweise die Täler auf der Unterseite bilden und umgekehrt.

Die Erfindung betrifft auch ein System mit einer erfindungsgemäßen Abdeckvorrichtung und einem Dachhaken zur Befestigung eines Solarpanels oder eines Photovoltaikmoduls.

Im montierten Zustand kann sich der Dachhaken beispielsweise auf der Abdeckvorrichtung abstützen.

Alle hier beschriebenen Aspekte, Ausführungsformen und Merkmale der Erfindung können, vorzugsweise auch losgelöst von der konkreten Ausgestaltung, in deren Zusammenhang sie erwähnt werden, jeweils miteinander kombiniert werden. Vorzugsweise können alle Gegenstände der abhängigen Ansprüche untereinander und mit jedem Gegenstand der unabhängigen Ansprüche kombiniert werden.

Die Erfindung wird im Folgenden beispielhaft unter Bezugnahme auf die Zeichnungen beschrieben. Es zeigen:
- Fig. 1: eine obere Perspektivansicht einer Ausführungsform einer erfindungsgemäßen Abdeckvorrichtung,
- Fig. 2: eine untere Perspektivansicht einer Ausführungsform einer erfindungsgemäßen Abdeckvorrichtung, und
- Fig. 3: eine geschnittene Seitenansicht der Ausführungsform gemäß Fig. 2.

Zunächst ist zu bemerken, dass die dargestellten Ausführungsformen rein beispielhafter Natur sind. So können einzelne Merkmale nicht nur in der gezeigten Kombination, sondern auch in Alleinstellung oder in anderen technisch sinnvollen Kombinationen realisiert sein. Beispielsweise können die Merkmale einer Ausführungsform beliebig mit Merkmalen einer anderen Ausführungsform kombiniert werden. Beispielsweise kann die Metallplatte auch vollständig geriffelt sein.

Enthält eine Figur ein Bezugszeichen, welches im unmittelbar zugehörigen Beschreibungstext nicht erläutert wird, so wird auf die entsprechenden vorhergehenden bzw. nachfolgenden Ausführungen in der Figurenbeschreibung Bezug genommen. So werden für gleiche bzw. vergleichbare Bauteile in den Figuren dieselben Bezugszeichen verwendet und diese nicht nochmals erläutert.

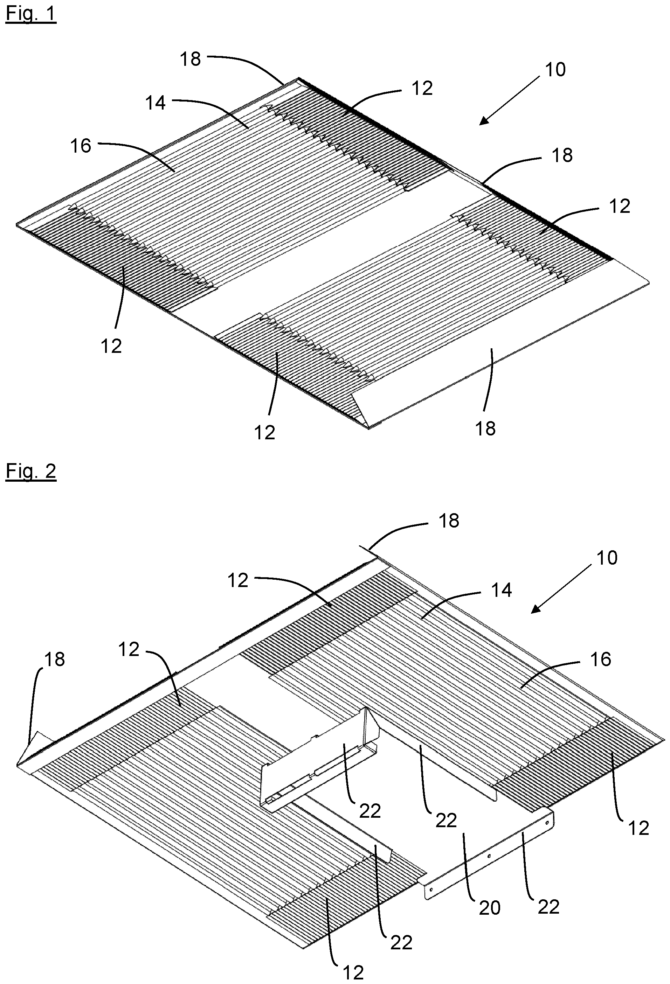

Fig. 1 zeigt eine Abdeckvorrichtung zum Abdecken eines Bereichs eines Dachs.

Die Abdeckvorrichtung weist eine öffnungsfreie Metallplatte 10 mit verformbaren Anpassbereichen 12 auf. Vorzugsweise können die Anpassbereiche 12 an einem oberen und einem unteren Bereich der Metallplatte 10 vorgesehen sein.

Der Anpassbereiche 12 können an die Kontur der darunter und/oder darüber anschließenden Dachziegel angepasst werden. Beispielsweise können die Anpassbereiche 12 per Hand angedrückt werden.

Die Metallplatte 10 weist ferner einen Abdeckbereich 14 mit Riffelungen 16 auf.

Vorzugsweise kann die Metallplatte 10 an drei Seiten abgekantet sein. So können die Endbereiche der Seiten einen Knick 18 bilden. Auf diese Weise wird verhindert, dass Verschmutzungen und/oder Wasser in das Dach eindringen.

Wie in Fig. 2 dargestellt ist, ist an der Unterseite der Metallplatte 10 eine Trittschutzvorrichtung 20 angeordnet.

Die Trittschutzvorrichtung 20 weist an allen vier Seiten jeweils einen nach unten gerichteten Vorsprung 22 auf. Über die Vorsprünge 22 kann eine Befestigung an einer Unterkonstruktion erfolgen.

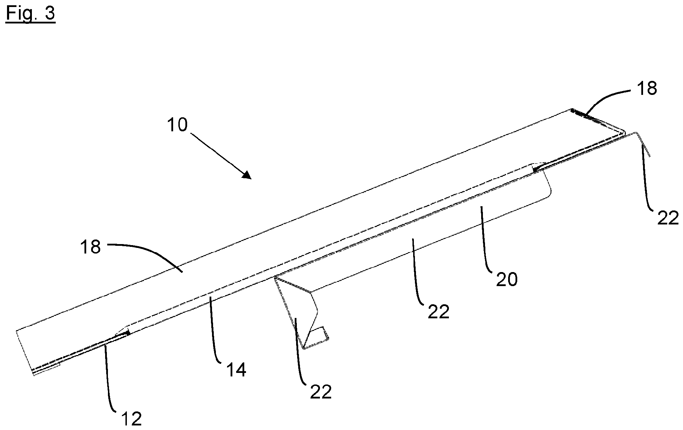

Die Vorsprünge 22 sind zum Teil auch in der Seitenansicht in Fig. 3 zu sehen.

### Bezugszeichenliste

- 10: Metallplatte
- 12: Anpassbereich
- 14: Abdeckbereich
- 16: Riffelung
- 18: Knick
- 20: Trittschutzvorrichtung
- 22: Vorsprung

## Patentansprüche

1. Abdeckvorrichtung zum Abdecken eines Bereichs eines Dachs, vorzugs-
weise zur Befestigung eines Solarpanels oder eines Photovoltaikmoduls, aufweisend
eine Metallplatte (10) mit einem verformbaren Anpassbereich (12) und mit einem Abdeckbereich (14), wobei der Abdeckbereich (14) Riffelungen (16) aufweist, und
eine an der Unterseite der Metallplatte (10) angeordnete Trittschutzvorrichtung (20), **dadurch gekennzeichnet, dass** die Metallplatte zumindest im Wesentlichen öffnungsfrei ist.

2. Abdeckvorrichtung nach Anspruch 1,
**dadurch gekennzeichnet,**
**dass** die Trittschutzvorrichtung (20), vorzugsweise zentral, an der Unterseite der Metallplatte (10) befestigt ist.

3. Abdeckvorrichtung nach Anspruch 1 oder 2,
**dadurch gekennzeichnet,**
**dass** die Trittschutzvorrichtung (20) mit der Metallplatte (10) verklebt ist.

4. Abdeckvorrichtung nach einem der vorhergehenden Ansprüche,
**dadurch gekennzeichnet,**
**dass** die Trittschutzvorrichtung (20) plattenförmig ausgebildet ist.

5. Abdeckvorrichtung nach einem der vorhergehenden Ansprüche,
**dadurch gekennzeichnet,**
**dass** die Trittschutzvorrichtung (20) wenigstens einen nach unten gerichteten Vorsprung (22) aufweist.

6. Abdeckvorrichtung nach einem der vorhergehenden Ansprüche,
**dadurch gekennzeichnet,**
**dass** die Trittschutzvorrichtung (20) kleiner als die Metallplatte (10) ist.

7. Abdeckvorrichtung nach einem der vorhergehenden Ansprüche,
**dadurch gekennzeichnet,**
**dass** die Trittschutzvorrichtung (20) ein Metallmaterial aufweist oder daraus besteht.

8. Abdeckvorrichtung nach einem der vorhergehenden Ansprüche,
**dadurch gekennzeichnet,**
**dass** die Riffelungen (16) wellenförmige, sägezahnförmige, rechteckförmige und/oder trapezförmige Strukturen aufweisen oder daraus bestehen.

9. Abdeckvorrichtung nach einem der vorhergehenden Ansprüche,
**dadurch gekennzeichnet,**
**dass** die Riffelungen (16) auf der Ober- und Unterseite der Metallplatte (10) vorgesehen sind.

10. System mit einer Abdeckvorrichtung nach einem der vorhergehenden Ansprüche und einem Dachhaken zur Befestigung eines Solarpanels oder eines Photovoltaikmoduls.

## Claims

1. Covering device for covering an area of a roof, preferably for fastening a solar panel or a photovoltaic module, comprising
a metal plate (10) with a deformable fitting region (12) and with a cover region (14), wherein
the cover region (14) has corrugations (16), and
a step protection device (20) disposed on the underside of the metal plate (10), **characterised in that** the metal plate is at least substantially free of openings.

2. Covering device according to claim 1,
**characterised in that**
the step protection device (20) is fastened, preferably centrally, to the underside of the metal plate (10).

3. Covering device according to claim 1 or 2,
**characterised in that**
the step protection device (20) is adhesively bonded to the metal plate (10).

4. Covering device according to any of the preceding claims,
**characterised in that**
the step protection device (20) is designed in the form of a plate.

5. Covering device according to any of the preceding claims,
**characterised in that**
the step protection device (20) has at least one downwardly directed projection (22).

6. Covering device according to any of the preceding claims,
**characterised in that**
the step protection device (20) is smaller than the metal plate (10).

7. Covering device according to any of the preceding claims,
**characterised in that**
the step protection device (20) comprises or consists of a metal material.

8. Covering device according to any of the preceding claims,
**characterised in that**
the corrugations (16) have or consist of wave-shaped, saw-tooth-shaped, rectangular and/or trapezoidal structures.

9. Covering device according to any of the preceding claims,
**characterised in that**
the corrugations (16) are provided on the upper and the lower side of the metal plate (10).

10. System with a covering device according to any of the preceding claims and a roof hook for fastening a solar panel or a photovoltaic module.

## Revendications

1. Dispositif de couverture pour couvrir une zone d'un toit, de préférence pour fixer un panneau solaire ou un module photovoltaïque, comprenant une plaque métallique (10) présentant une zone d'adaptation déformable (12) et une zone de couverture (14), la zone de couverture (14) présentant des cannelures (16), et
un dispositif de protection pour la marche (20) disposé sur la face inférieure de la plaque métallique (10),
**caractérisé en ce que** la plaque métallique est au moins sensiblement exempte d'ouvertures.

2. Dispositif de couverture selon la revendication 1,
**caractérisé en ce que**
le dispositif de protection pour la marche (20) est fixé, de préférence de manière centrale, à la face inférieure de la plaque métallique (10).

3. Dispositif de couverture selon la revendication 1 ou 2,
**caractérisé en ce que**
le dispositif de protection pour la marche (20) est collé à la plaque métallique (10).

4. Dispositif de couverture selon l'une des revendications précédentes,
**caractérisé en ce que**
le dispositif de protection pour la marche (20) a la forme d'une plaque.

5. Dispositif de couverture selon l'une des revendications précédentes, **caractérisé en ce que**
le dispositif de protection pour la marche (20) présente au moins une saillie (22) orientée vers le bas.

6. Dispositif de couverture selon l'une des revendications précédentes, **caractérisé en ce que**
le dispositif de protection pour la marche (20) est plus petit que la plaque métallique (10).

7. Dispositif de couverture selon l'une des revendications précédentes, **caractérisé en ce que**
le dispositif de protection pour la marche (20) comprend ou est constitué d'un matériau métallique.

8. Dispositif de couverture selon l'une des revendications précédentes, **caractérisé en ce que**
les cannelures (16) présentent ou sont constituées de structures ondulées, en dents de scie, rectangulaires et/ou trapézoïdales.

9. Dispositif de couverture selon l'une des revendications précédentes, **caractérisé en ce que**
les cannelures (16) sont prévues sur les faces supérieure et inférieure de la plaque métallique (10).

10. Système comprenant un dispositif de couverture selon l'une des revendications précédentes et un crochet de toit pour fixer un panneau solaire ou un module photovoltaïque.
